# FASCICULE DE BREVET EUROPEEN

(11) **EP 3 078 521 B1**
(45) Date de publication et mention de la délivrance du brevet: **17.01.2018**
(21) Numéro de dépôt: 16161768.3
(22) Date de dépôt: 22.03.2016
(51) Int. Cl.: B60J 5/06, B60P 7/08, B60J 7/10

(54) **DISPOSITIF D'ENROULEMENT A COMMANDE MANUELLE D'UN ELEMENT ENROULABLE**
AUFROLLVORRICHTUNG MIT MANUELLER STEUERUNG EINES AUFROLLBAREN ELEMENTS
MANUALLY CONTROLLED DEVICE FOR WINDING A WINDABLE ELEMENT

(30) Priorité: 24.03.2015 FR 1552437
(43) Date de publication de la demande: 12.10.2016
(73) Titulaire: Thiriet, 08000 Warcq (FR)
(72) Inventeur: THIRIET, Isabelle, 08000 CHARLEVILLE-MEZIERES (FR)
(74) Mandataire: Bureau Duthoit Legros Associés

(56) Documents cités:
- EP-A1- 0 104 155
- EP-A1- 2 799 285
- GB-A- 2 016 625

## Description

L'invention est relative à un dispositif d'enroulement à commande manuelle d'un élément enroulable, tel qu'une bâche, autour d'un arbre d'enroulement. L'invention trouvera une application particulière dans le domaine du transport de marchandises pour enrouler et tendre les bâches amovibles de caisses de véhicules, tels que camion ou remorques.

Dans ce domaine, il est connu des caisses de véhicules équipées de bâches amovibles destinées à former les parois latérales de la caisse, et qui peuvent être retirées pour permettre le chargement ou le déchargement des marchandises du véhicule. A cet effet, l'art antérieur connait des dispositifs d'enroulement à commande manuelle, connus sous l'appellation de « tendeurs de bâche » qui permettent l'enroulement de la bâche autour d'un arbre d'enroulement, généralement extrudé en aluminium. Les dispositifs des documents GB 2 016 625 A, EP0616968, FR2819501 ou encore FR 2814448, EP1900569, ou FR2978391 en sont des exemples.

Ce dispositif d'enroulement permet, non seulement, l'enroulement complet de la bâche sur l'arbre d'enroulement lorsque la bâche est retirée, mais permet également de tendre la bâche lorsqu'elle forme la paroi latérale de la caisse du véhicule. Bien souvent un tel dispositif d'enroulement comprend un axe d'entraînement destiné à être assujetti audit arbre d'enroulement, un support fixe sur lequel est monté tourillonnant ledit axe d'entraînement, un organe de manoeuvre formant une poignée destinée à être actionnée par un opérateur pour enrouler et/ou tendre la bâche.

A cet effet le dispositif comprend un mécanisme d'encliquetage apte à permettre la rotation dudit axe d'entraînement, dans un seul sens, lors de la mise en oscillation dudit organe de manoeuvre.

Ce mécanisme comprend :
- une roue dentée, solidaire en rotation dudit axe d'entraînement, et une dent ou un cliquet solidaire de l'organe de manoeuvre, apte à engrener avec la denture de ladite roue dentée pour provoquer la rotation de l'axe d'entraînement suivant un premier sens (sens d'enroulement), ce cliquet (ou cette dent) étant apte à échapper la denture de la roue dentée lors du retour de l'organe de manoeuvre suivant un deuxième sens d'actionnement ;
- un cliquet, à fonction d'anti-retour, solidaire dudit support fixe, apte à glisser sur ladite roue dentée lors de l'actionnement de l'organe de manoeuvre dans ledit premier sens d'actionnement, et apte à engager avec la denture de la roue dentée pour retenir l'axe d'entraînement lorsque l'organe de manoeuvre est actionné dans sens de retour.

Ces dispositifs d'enroulement équipent classiquement les caisses de camion et permettent l'enroulement de ladite bâche autour d'un arbre d'enroulement, et surtout la mise en tension de ladite bâche latérale du camion.

Un tel dispositif permet de tendre fortement la bâche pour former la paroi latérale de la caisse. Dans cette position, le cliquet anti-retour et le cliquet (ou la dent) de l'organe de manoeuvre engagent avec la roue dentée pour s'opposer au déroulement. Il est d'importance de tendre fortement les bâches en ce que plus les bâches sont tendues, moins la bâche n'offre de résistance au vent, diminuant de fait la consommation énergétique du véhicule.

D'une manière connue, ces dispositifs d'enroulement, ou tendeurs de bâches, sont pourvus de chaque côté de la caisse, bien souvent équipé d'un premier dispositif à l'arrière de la caisse et d'un second dispositif à l'avant de la caisse.

Selon les constatations de l'inventeur et, du fait de l'encombrement disponible à l'avant de la caisse, bien souvent inférieur à celui disponible en position arrière, l'intégration de tels dispositifs est généralement plus difficile en position avant qu'en position arrière sur la caisse.

Selon les constatations de l'inventeur, il existe, en particulier, pour une pose à l'avant de la caisse, un besoin pour un dispositif d'enroulement dont la structure permettrait d'obtenir une meilleure compacité du dispositif d'enroulement, suivant son épaisseur, et en particulier afin de limiter la largeur hors-tout de cette caisse équipée d'un tel dispositif.

La présente invention a pour but de pallier les inconvénients précités en proposant un dispositif d'enroulement dont la structure permet de répondre à cet objectif d'encombrement limité.

Un autre but de la présente invention est de proposer, au moins selon un mode de réalisation, un dispositif d'enroulement qui s'intègre particulièrement à la géométrie de l'avant de la caisse.

Un autre but de la présente invention est de proposer, au moins selon un mode de réalisation, un tel dispositif d'enroulement dont la libération de l'axe d'entraînement est facilitée, opérable d'une seule main, et contrairement à la plupart des dispositifs d'enroulement de l'état de la technique dont la libération de cet axe d'entrainement immobilise les deux mains de l'utilisateur pour respectivement dégager, de la roue dentée, d'une part, le cliquet anti-retour, d'autre part, et le cliquet (ou la dent) de l'organe de manoeuvre, à fonction d'enroulement.

D'autres buts et avantages de l'invention apparaîtront au cours de la description qui va suivre qui n'est donnée qu'à titre indicatif et qui n'a pas pour but de la limiter.

L'invention concerne un dispositif d'enroulement à commande manuelle d'un élément enroulable, tel qu'une bâche, autour d'un arbre d'enroulement, ledit dispositif comprenant :
- un axe d'entrainement,
- un support fixe sur lequel est monté ledit axe d'entrainement, en libre rotation
- un organe de manoeuvre présentant une poignée et un mécanisme d'encliquetage aptes à permettre la rotation dudit axe d'entrainement dans un seul sens lors de la mise en oscillation dudit organe de manoeuvre, ledit mécanisme d'encliquetage comprenant :
- une roue dentée solidaire en rotation de l'axe d'entrainement,
- une dent, à fonction d'entraînement, actionnable par l'organe de manoeuvre, apte à engager avec la roue dentée pour provoquer la rotation de l'axe d'entraînement suivant un premier sens de rotation de la poignée de l'organe de manoeuvre, la dent étant apte à échapper à la denture de la roue dentée, dans un deuxième sens de rotation de la poignée de l'organe de manoeuvre,
- un cliquet, à fonction d'anti-retour, solidaire dudit support fixe, apte à glisser sur la roue dentée lors de l'actionnement de la poignée de l'organe de manoeuvre dans ledit premier sens de rotation, et apte à engager avec la denture de la roue dentée pour retenir l'axe d'entraînement lors de l'actionnement de la poignée de l'organe de manoeuvre dans ledit deuxième sens de rotation.

Selon l'invention, ledit organe de manoeuvre comprend :
- un premier levier formant ladite poignée, ledit premier levier étant articulé audit support fixe, suivant un axe de pivot distinct dudit axe de pivot dudit axe d'entrainement, et de position écartée par rapport à ce dernier,
- un deuxième levier portant ladite dent d'entraînement, ledit deuxième levier étant articulé audit premier levier suivant un axe de pivot entre le premier et ledit deuxième levier,
- des moyens ressorts entre le premier levier et ledit deuxième levier, contraignant ledit deuxième levier et la dent portée par ledit deuxième levier en direction de la roue dentée, de manière à provoquer l'engagement de la dent dans ledit premier sens de rotation de la poignée de l'organe de manoeuvre et autoriser l'échappement de la roue dentée dans ledit deuxième sens de rotation de la poignée de l'organe de manoeuvre.

Selon des caractéristiques optionnelles de l'invention, prises seules ou en combinaison :
- le dispositif présente une position de repos de l'organe de manoeuvre, rabattu contre ledit support fixe et dans laquelle la dent d'entrainement dudit deuxième levier et le cliquet coopèrent avec la denture de la roue dentée en bloquant la rotation de l'axe d'entrainement ;
- le support fixe présente une platine de fixation et des flasques entre lesquels sont articulés la roue dentée et le cliquet, et dans lequel le premier levier comprend, successivement, depuis l'axe de pivot entre le premier levier et le support fixe, une première section de longueur, suivie d'une deuxième section de longueur du premier levier, ladite deuxième section de longueur formant ladite poignée et étant d'axe incliné par rapport à l'axe de la première section de longueur et de telle façon que dans ladite position de repos, la poignée formée par le premier levier s'étend par rapport audit support fixe, suivant une direction inclinée par rapport à l'axe longitudinal dudit support fixe, en étant orientée du même côté que celui de la platine de fixation;
- le dispositif présente des moyens d'immobilisation de dispositif d'enroulement, dans la position de repos de l'organe de manoeuvre ;
- l'axe de pivot entre le premier levier et le support fixe est confondu avec l'axe de pivot du cliquet à fonction d'anti-retour ;
- dans ladite position de repos de l'organe de manoeuvre, l'axe de pivot entre le premier levier et le support fixe est positionné dans une position intermédiaire entre l'axe de pivot de l'axe d'entraînement et l'axe de pivot de l'articulation entre le premier levier et le deuxième levier ;
- dans la position de repos de l'organe de manoeuvre, ledit deuxième levier recouvre le cliquet en y interdisant l'accès ;
- dans ladite position de repos de l'organe de manoeuvre, la dimension d'encombrement (hors tout) depuis la platine de fixation et selon une direction perpendiculaire à la platine est inférieure à 40 mm, de préférence inférieure à 35 mm par exemple 32 mm.

Selon un mode de réalisation, lesdits moyens d'immobilisation de dispositif d'enroulement, dans la position de repos de l'organe de manoeuvre, comprennent :
- des ouvertures desdits flasques,
- des ouvertures dudit premier levier, en regard desdites ouvertures de flasques dans ladite position de repos de l'organe de manoeuvre,
- un épaulement dudit deuxième levier, au voisinage desdites ouvertures de flasques et du premier levier, dans ladite position de repos de l'organe de manoeuvre,
et de telle façon à immobiliser le dispositif d'enroulement en insérant un organe de blocage tel qu'un câble notamment câble TIR ou une goupille, simultanément dans lesdites ouvertures desdits flasques et les ouvertures dudit premier levier et de telle façon à obtenir le blocage de la rotation relative entre le premier levier et le support fixe, l'organe de blocage coopérant avec ledit épaulement dudit deuxième levier de manière à obtenir le blocage de la rotation relative entre ledit premier levier et ledit deuxième levier.

Selon un mode de réalisation, les mouvements d'oscillation du premier levier de l'organe de manoeuvre permettant l'actionnement en rotation de l'axe d'entraînement s'opère sur une course angulaire limitée, à partir de la position de repos de l'organe de manoeuvre, appelée course angulaire d'actionnement, la libération en rotation de l'axe d'entraînement étant avantageusement obtenue, à partir de ladite position de repos, par une action de traction sur la poignée de l'organe de manoeuvre et selon une course angulaire allant au-delà de la course angulaire d'actionnement.

A cet effet, ledit mécanisme de libération de l'axe d'entrainement comprend :
- une ou plusieurs cames du support fixe, destinées à coopérer avec un ou plusieurs suiveurs de cames du second levier, lors de la rotation de la poignée au-delà de la course angulaire d'actionnement, de telle façon à engendrer la rotation relative du deuxième levier par rapport au premier levier à l'encontre de la force de rappel des moyens ressorts, et jusqu'à faire échapper la dent de la roue dentée,
- des butées du premier levier destinées à coopérer avec le cliquet, lors de la rotation de la poignée au-delà de la course angulaire d'actionnement, afin de provoquer l'échappement du cliquet de la denture de la roue dentée.

Par exemple, les cames sont formées par des rampes formées sur les bords supérieurs des flasques, les suiveurs de cames, par des ergots latéraux dudit deuxième levier. Les butées du premier levier sont formées aux extrémités de deux branches s'étendant respectivement dans deux inter-espaces It1 et It2 respectifs définis entre les flasques, d'une part, et l'ensemble cliquet anti-retour et deuxième levier, d'autre part, les butées coopérant avec des ergots latéraux du cliquet pour provoquer la rotation du cliquet et l'échappement du cliquet de la roue dentée.

Selon un autre mode de réalisation, la libération de l'axe d'entraînement peut être obtenue par une action manuelle directe sur le deuxième levier. A cet effet, ledit deuxième levier présente une extrémité libre de préhension, ainsi qu'une came destinée à engager avec ledit cliquet au désengagement et de telle façon à provoquer la libération en rotation de l'axe d'entraînement, depuis la position de repos de l'organe de manoeuvre, par la rotation dudit deuxième levier à l'encontre de la force de rappel des moyens ressort, cette rotation dudit deuxième levier provoquant conjointement l'échappement de la dent d'actionnement de la denture de la roue dentée, d'une part, et l'échappement du cliquet de la denture de la roue par l'action de la came, d'autre part.

L'invention concerne également une caisse de véhicule de transport de marchandises équipée d'une bâche amovible et d'un dispositif d'enroulement à commande manuelle selon l'invention, apte à permettre l'enroulement de ladite bâche autour d'un arbre d'enroulement et la mise en tension de ladite bâche.

Selon un mode de réalisation, la caisse est équipée d'un dispositif à l'avant de la caisse, au niveau d'un angle de la caisse, et dans laquelle la platine de fixation du dispositif est fixée à une surface latérale de la caisse, la poignée de l'organe de manoeuvre s'étendant, dans ladite position de repos, vers l'intérieur, dans une position inclinée par rapport à la surface latérale et à la platine de fixation.

L'invention sera mieux comprise à la lecture de la description suivante accompagnée des dessins en annexe parmi lesquels :

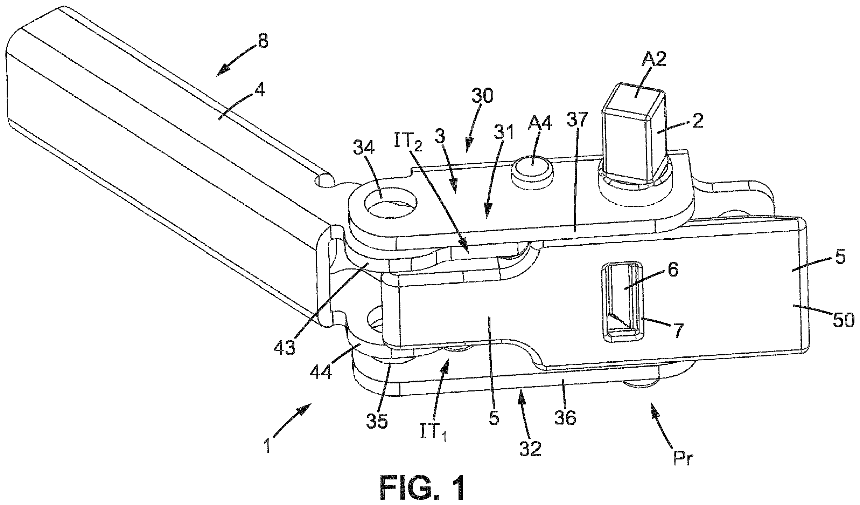

- La figure 1 est une vue schématique d'un dispositif d'enroulement conforme à l'invention selon un premier mode de réalisation,

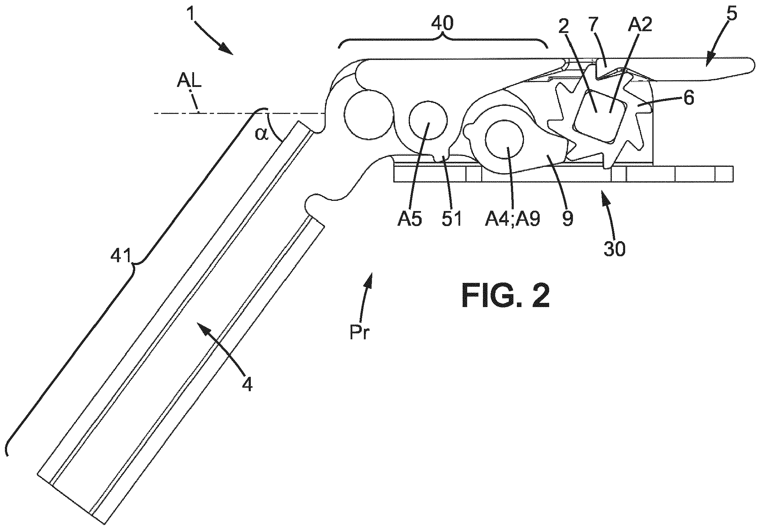

- La figure 2 est une vue de coupe, du dispositif de la figure 1, en position de repos de l'organe de manoeuvre, rabattu contre le support fixe,

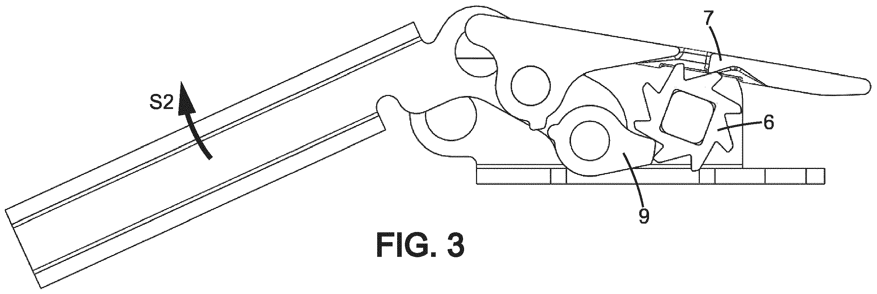

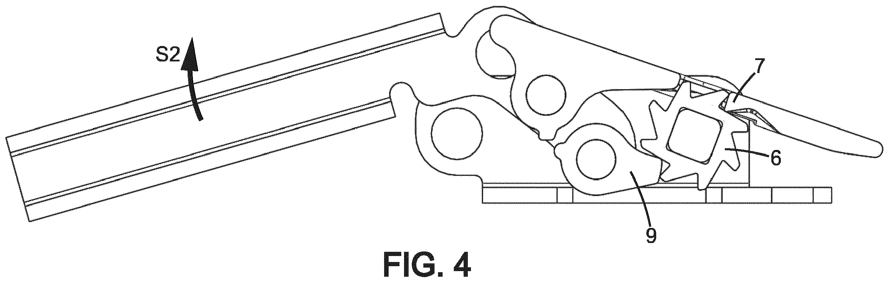

- Les figures 3 et 4 sont des vues du dispositif de la figure 2, illustrant le dispositif lors de l'actionnement de l'organe de manoeuvre dans le sens S2, en exerçant une traction sur la poignée de l'organe de manoeuvre, le cliquet retenant la roue dentée et l'axe d'entraînement et alors que la dent d'entraînement du deuxième levier échappe à la denture de la roue dentée,

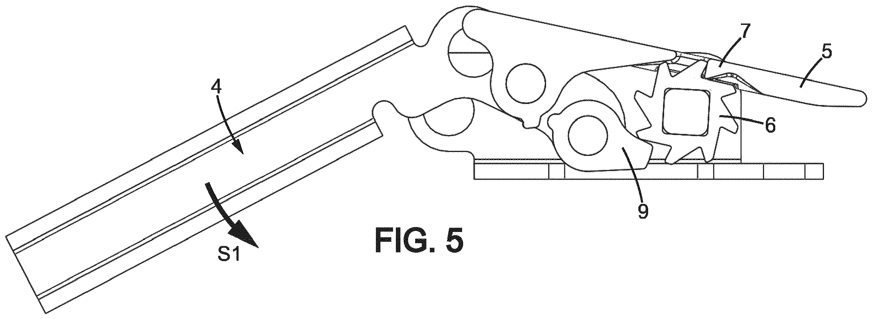

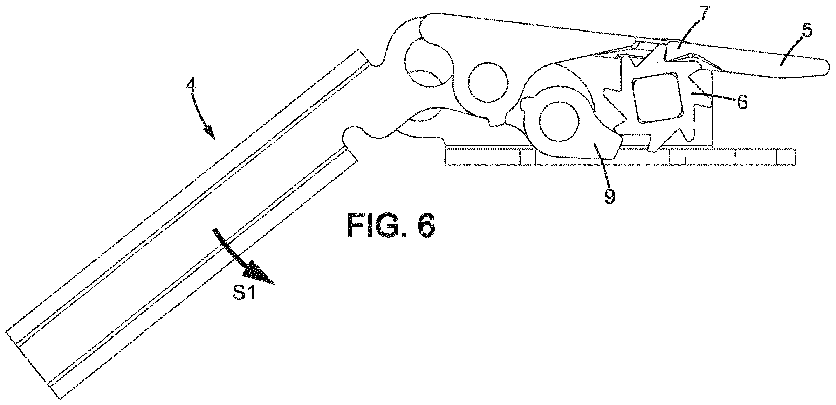

- Les figures 5 à 7 sont des vues successives aux figures 3 et 4, illustrant le dispositif lors de l'actionnement de l'organe de manoeuvre dans le sens S1, à savoir le sens de poussée, la dent d'entraînement du deuxième levier engageant avec la roue dentée et provoquant la rotation de la roue dentée, le cliquet glissant sur la roue dentée,

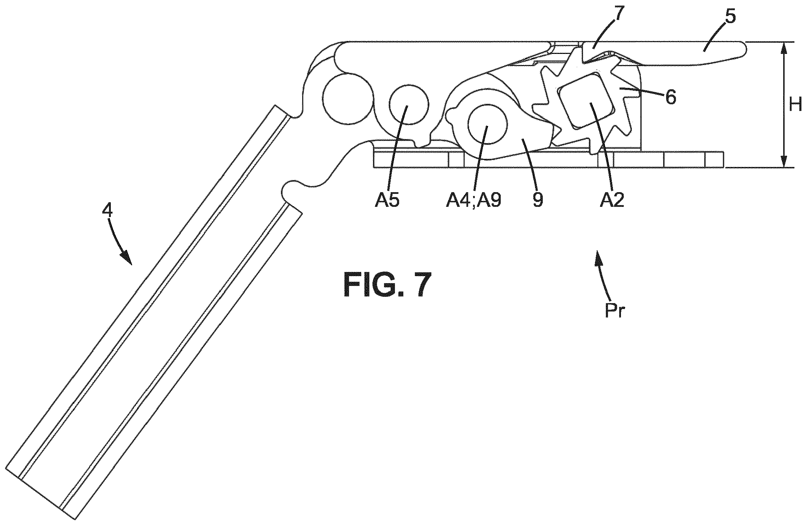

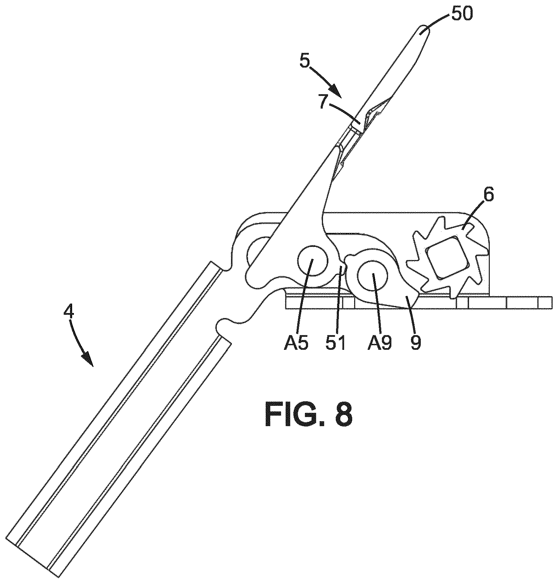

- La figure 8 est une vue du dispositif d'enroulement de la figure 7, en position de libération de l'axe d'enroulement,

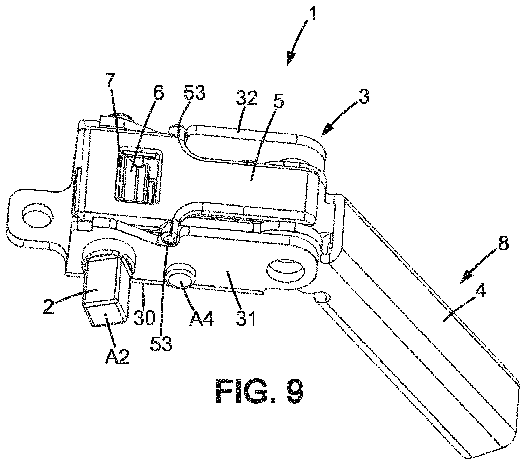

- La figure 9 est une vue du dispositif d'enroulement conforme à l'invention, selon un second mode de réalisation,

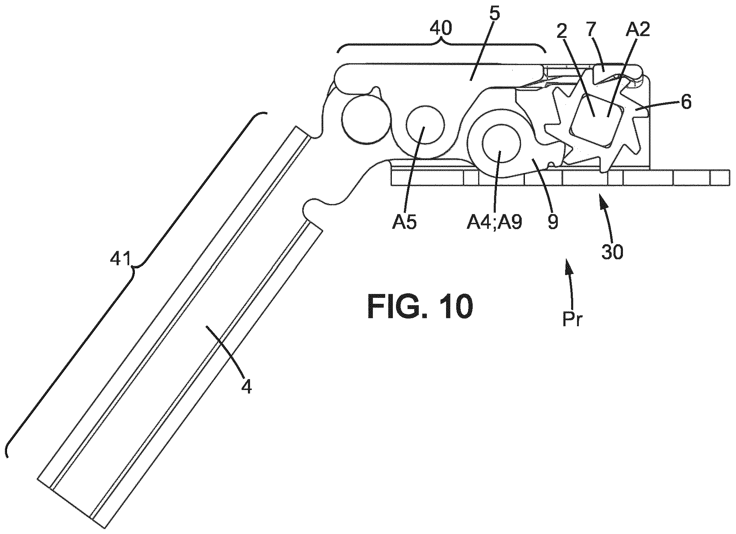

- La figure 10 est une vue de coupe, du dispositif de la figure 9, en position de repos de l'organe de manoeuvre, rabattu contre le support fixe,

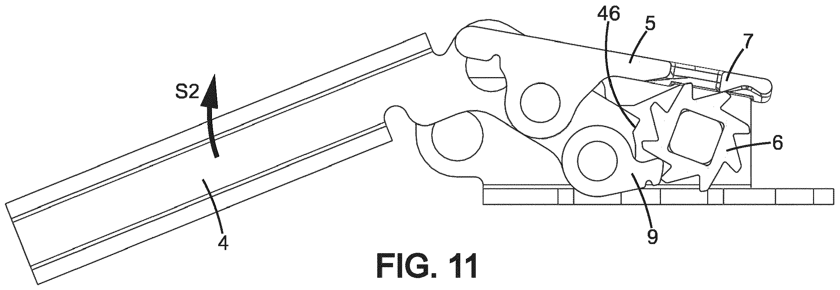

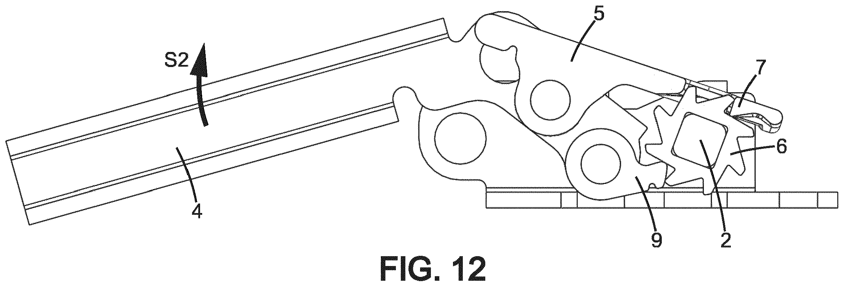

- Les figures 11 et 12 sont des vues du dispositif de la figure 10, illustrant le dispositif lors de l'actionnement de l'organe de manoeuvre dans le sens S2, en exerçant une traction sur la poignée de l'organe de manoeuvre, le cliquet retenant la roue dentée et l'axe d'entraînement et alors que la dent d'entraînement du deuxième levier échappe à la denture de la roue dentée,

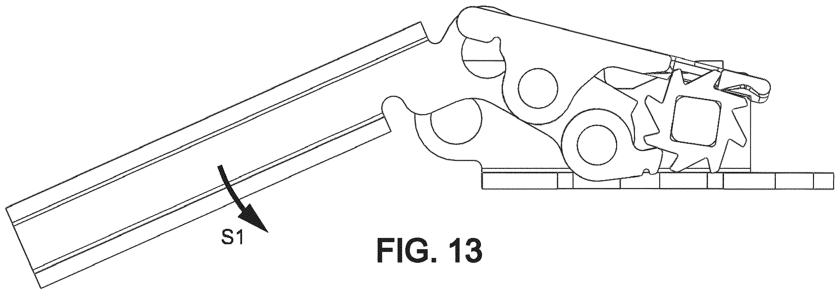

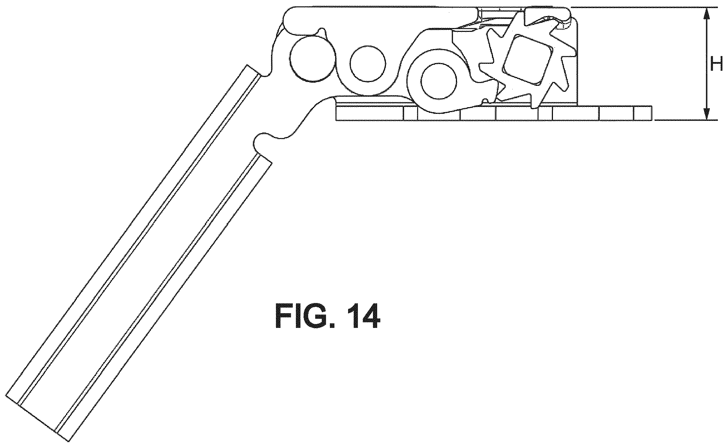

- Les figures 13 et 14 sont des vues successives aux figures 11 et 12, illustrant le dispositif lors de l'actionnement de l'organe de manoeuvre dans le sens S1, à savoir le sens de poussée, la dent d'entraînement du deuxième levier engageant avec la roue dentée et provoquant la rotation de la roue dentée, le cliquet glissant sur la roue dentée,

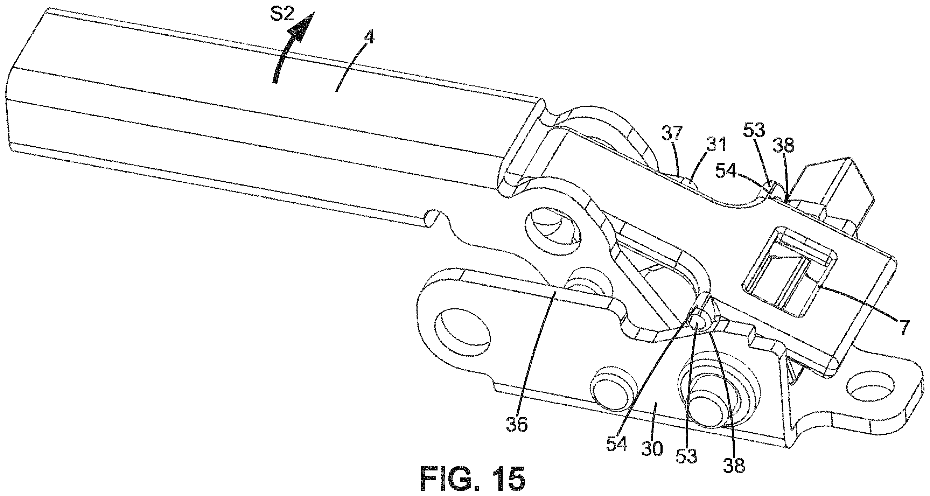

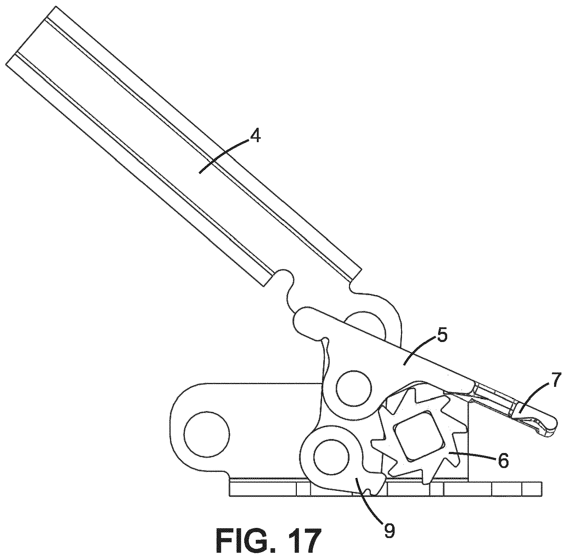

- Les figures 15 à 17 sont des vues de coupe du dispositif des figures 9 à 14, illustrant l'actionnement de l'organe de manoeuvre, dans une position au-delà de la course utile du levier assurant l'actionnement en rotation de l'axe de d'enroulement, et jusqu'à provoquer la libération de l'axe d'enroulement (visible à la figure 17),

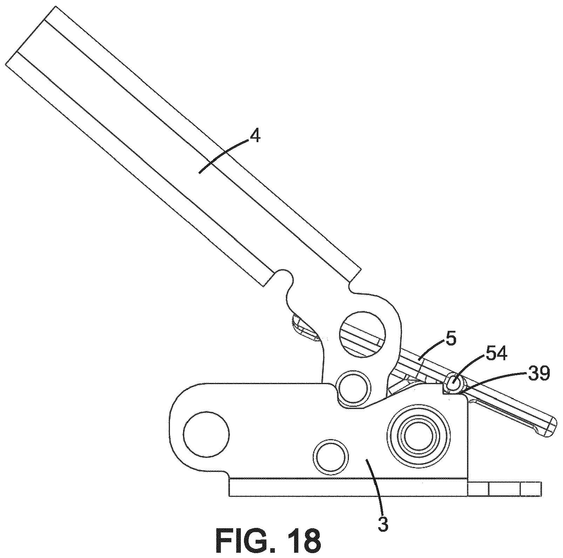

- La figure 18 est vue de côté du dispositif dans la position de la figure 17, illustrant plus particulièrement l'engagement d'ergots du deuxième levier avec des épaulements au niveau du chant supérieur du support fixe, et de sorte à assurer un blocage de position,

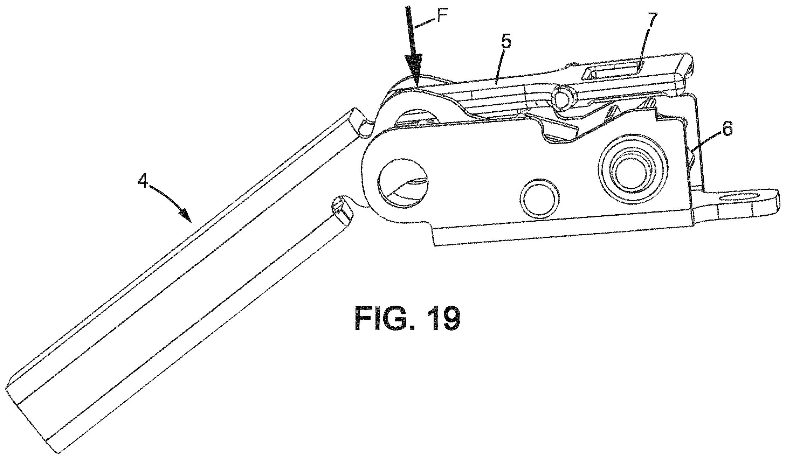

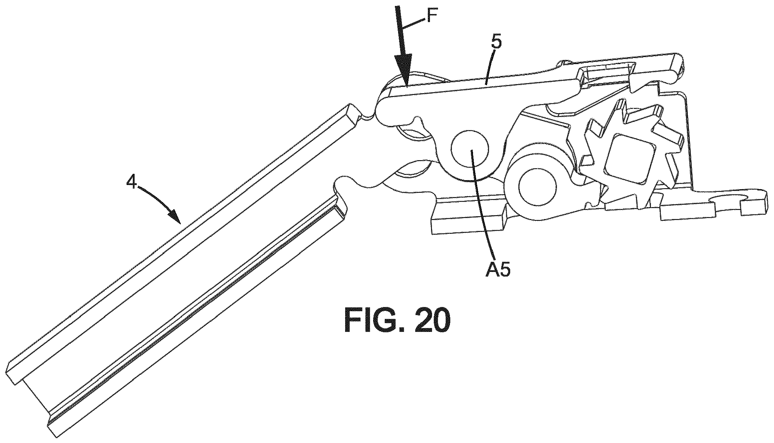

- Les figures 19 et 20 sont respectivement des vues de côté et de coupe, montrant comment, il est encore possible de dégager la dent du deuxième levier, de la même main utilisée pour saisir la poignée du premier levier, par action du pouce sur la partie proximale du second levier (indiquée par la flèche),

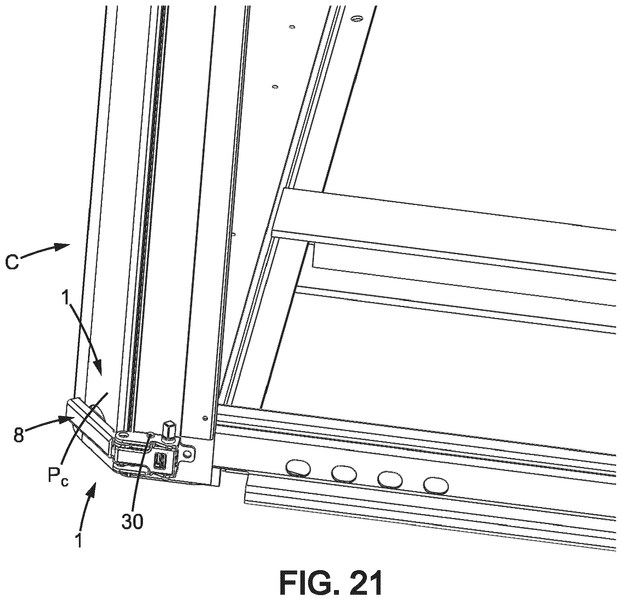

- La figure 21 est une vue en perspective illustrant l'intégration du dispositif des figures 10 à 20, à l'avant de la caisse, dans une configuration où le support fixe est solidarisé par sa platine au flanc latéral de la caisse, la poignée du premier levier s'étendant vers l'avant en longeant un pan incliné de l'angle de caisse,

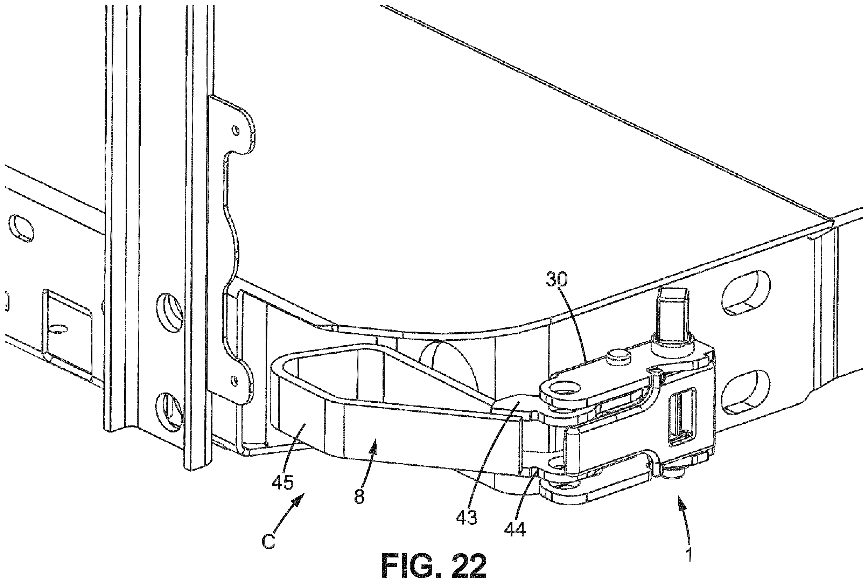

- La figure 22 est une vue en perspective illustrant l'intégration d'un dispositif conforme à l'invention selon un troisième mode de réalisation, la platine du support fixe étant fixée au flanc latéral du bas de caisse, et alors que la poignée du premier levier vient se loger dans un évidement du bas de caisse, au niveau de l'angle du bas de caisse.

L'invention concerne un dispositif d'enroulement 1 à commande manuelle d'un élément enroulable, tel qu'une bâche, autour d'un arbre d'enroulement, ledit dispositif comprenant :
- un axe d'entrainement 2,
- un support fixe 3 sur lequel est monté ledit axe d'entrainement 2, en libre rotation,
- un organe de manoeuvre 4,5 présentant une poignée et un mécanisme d'encliquetage apte à permettre la rotation dudit axe d'entrainement 2 dans un seul sens lors de la mise en oscillation dudit organe de manoeuvre, ledit mécanisme d'encliquetage comprenant :
- une roue dentée 6 solidaire en rotation de l'axe d'entrainement 2,
- une dent 7, à fonction d'entraînement, actionnable par l'organe de manoeuvre 4,5, apte à engager avec la roue dentée 6 pour provoquer la rotation de l'axe d'entraînement 2 suivant un premier sens de rotation S1 de la poignée 8 de l'organe de manoeuvre, la dent 7 étant apte à échapper à la denture de la roue dentée 6, dans un deuxième sens S2 de rotation de la poignée de l'organe de manoeuvre,
- un cliquet 9, à fonction d'anti-retour, solidaire dudit support fixe 3, apte à glisser sur la roue dentée 6 lors de l'actionnement de la poignée 8 de l'organe de manoeuvre dans ledit premier sens de rotation S1, et apte à engager avec la denture de la roue dentée 6 pour retenir l'axe d'entraînement 2 lors de l'actionnement de la poignée de l'organe de manoeuvre dans ledit deuxième sens de rotation S2.

A la connaissance de l'inventeur, et dans les dispositifs d'enroulement de l'état de la technique présentant une structure similaire (notamment ceux des documents EP0616968, FR2819501 ou encore FR 2814448, EP1900569, ou FR2978391) l'organe de manoeuvre est toujours articulé suivant un axe de pivot dont l'axe est confondu à celui de l'axe d'entraînement et de la roue dentée. En fonctionnement, l'enroulement et la mise en tension dans de tels dispositifs de l'art antérieur sont obtenus en actionnant la poignée de l'organe de manoeuvre en rotation, autour de cet axe confondu à celui de l'axe d'entraînement.

Bien souvent, et pour ces dispositifs, selon les constatations de l'inventeur une telle structure rend particulièrement difficile la diminution de l'encombrement suivant son épaisseur, dans la position de repos de l'organe de manoeuvre, à savoir la dimension et l'encombrement du dispositif à partir de la platine de fixation du support fixe, suivant une direction perpendiculaire à la platine, vers l'extérieur. Cette dimension d'encombrement, pertinente pour l'intégration lors de la pose, est illustrée pour l'invention à la figure 7 et repérée H pour un premier mode de réalisation de l'invention, ou encore à la figure 14 selon un second mode de réalisation.

A la connaissance de l'inventeur, cette dimension est toujours supérieure ou égale à 4 cm, dans les dispositifs d'enroulement utilisés pour tendre fortement les bâches de chargement de caisse de camion.

L'invention se distingue fondamentalement des dispositifs antérieurs connus par l'inventeur, en ce que, dans l'invention, la poignée de l'organe de manoeuvre est articulée au support fixe en une position distincte et non confondue avec l'axe de la roue dentée. Selon l'inventeur, cet agencement permet, sans diminuer la résistance du mécanisme, de concevoir un dispositif dont le mécanisme est d'épaisseur diminuée.

Aussi, et selon l'invention, l'organe de manoeuvre 4,5 comprend :
- un premier levier 4 formant ladite poignée 8, ledit premier levier 4 étant articulé audit support fixe 3, suivant un axe de pivot A4 distinct dudit axe de pivot A2 dudit axe d'entrainement 2, et de position écartée par rapport à ce dernier,
- un deuxième levier 5 portant ladite dent 7 d'entraînement, ledit deuxième levier 5 étant articulé audit premier levier 4 suivant un axe de pivot A5 entre le premier et ledit deuxième levier,
- des moyens ressorts (non illustrés) entre le premier levier 4 et ledit deuxième levier 5, contraignant ledit deuxième levier 5 et la dent 7 portée par ledit deuxième levier 5 en direction de la roue dentée 6, de manière à provoquer l'engagement de la dent 7 dans ledit premier sens de rotation S1 de la poignée 8 de l'organe de manoeuvre et autoriser l'échappement de la roue dentée 6 dans ledit deuxième sens de rotation S2 de la poignée 8 de l'organe de manoeuvre.

Les moyens ressorts entre le premier levier 4 et le deuxième levier 5 peuvent être un ressort de torsion monté sur l'axe A5 et dont les deux extrémités appuient respectivement sur le premier levier 4 et le deuxième levier 5.

Les axes de pivot A2, A4 et A5 précités sont parallèles entre eux. Selon un mode de réalisation, l'axe de pivot A4 entre le premier levier 4 et le support fixe 3 est confondu avec l'axe de pivot A9 du cliquet 9 à fonction d'anti-retour.

De préférence, tel qu'illustré non limitativement à la figure 2 ou 10, dans ladite position de repos Pr de l'organe de manoeuvre, l'axe de pivot A4 entre le premier levier 4 et le support fixe 3 est positionné dans une position intermédiaire entre l'axe de pivot A2 de l'axe d'entraînement 2 et l'axe de pivot A5 de l'articulation entre le premier levier 4 et le deuxième levier 5.

De préférence, et tel qu'illustré à titre d'exemple non limitatif à la figure 1 ou 2 (ou encore à la figure 9 ou 10), le dispositif présentant une position de repos Pr de l'organe de manoeuvre 4,5, rabattu contre ledit support fixe 3 et dans laquelle la dent 7 d'entrainement dudit deuxième levier 5 et le cliquet 9 coopèrent avec la denture de la roue dentée 6 en bloquant la rotation de l'axe d'entrainement 2, et de manière à interdire un déroulement.

L'actionnement de l'axe d'entraînement 2, notamment à partir de cette position de repos Pr est obtenu en actionnant la poignée 8 de l'organe de manoeuvre de mouvements de va-et-vient, encore appelés mouvements de mise en oscillation. Depuis la position de repos, l'opérateur tire tout d'abord sur la poignée 8, provoquant la rotation du premier levier 4 autour de son axe A4, suivant ledit deuxième sens de rotation S2 de la poignée 8 de l'organe de manoeuvre.

Lors de cette action de traction, illustrée aux figures 3 et 4 (ou encore aux figures 11 et 12), le cliquet 9 à fonction d'anti-retour engage avec la denture de la roue dentée 6, alors immobile, bloquant sa rotation dans le sens de déroulement, tandis que la dent 7, à fonction d'entraînement échappe à la denture et glisse sur la denture sur la roue dentée 6, grâce à la possibilité offerte par le deuxième levier 5 de s'écarter de la denture, par pivotement autour de l'axe A5, à l'encontre de la force de rappel des moyens ressorts.

Lors de l'inversion du sens de rotation (du sens S2 vers SI), à savoir d'une action de traction vers une action de poussée sur ladite poignée 8, cette dernière provoque la rotation du premier levier 4 autour de son axe A4 suivant le premier sens S1 de rotation de la poignée 8 de l'organe de manoeuvre, et la dent 7 engage à nouveau avec la roue dentée 6.

Lors de cette action de poussée illustrée aux figures 4 à 7 (ou encore aux figures 13 et 14), la dent 7 actionnée par l'organe de manoeuvre provoque la rotation dans le sens d'enroulement de l'ensemble axe d'entraînement 2 et roue dentée 6. Lors de cette action, le mouvement de l'organe de manoeuvre est un mouvement de rotation complexe au cours duquel, d'une part, le premier levier 4 et sa poignée 8 pivotent par rapport au support fixe 3 autour de l'axe A4, et d'autre part, simultanément, le deuxième levier 5 pivote par rapport au premier levier 4 afin de toujours maintenir l'engagement de la dent 7 d'entrainement avec la denture de la roue dentée 6, et notamment jusqu'à la position de repos Pr, notamment illustrée à la figure 7 (ou à la figure 14).

Le cas échéant lors de la mise en tension, il peut arriver qu'en raison de la trop forte tension l'opérateur n'ait pas la force suffisante pour ramener l'organe de manoeuvre 4,5 dans sa position de repos Pr. Dans ce cas, selon un mode de réalisation, illustré aux figures 19 et 20, alors que la rotation de l'axe d'entrainement 2 est bloquée par le cliquet 9, à fonction d'anti-retour, l'opérateur peut dégager la dent 7 du deuxième levier 5 par une action manuelle directe sur le deuxième levier 5.

Par exemple, et de la même main saisissant la poignée 8 du premier levier 4, l'opérateur peut appuyer avec son pouce sur l'extrémité proximale du deuxième levier 5 de sorte à dégager la dent 7. Cette action du pouce est illustrée par la flèche F. A cet effet, on remarque que la dent 7 et l'extrémité proximale du deuxième levier 5 sont situées de part et d'autre de l'axe de pivot A5 entre le deuxième levier 5 et le premier levier 4.

Le support fixe 3 peut présenter une platine de fixation 30 et des flasques 31,32 entre lesquels sont articulés la roue dentée 6 et le cliquet 9, de préférence en étant maintenus dans le volume interne entre flasques 31,32. Ce support fixe 3 peut être obtenu par emboutissage d'une tôle et pliage de la tôle en U afin de former respectivement la platine de fixation 30 et les deux flasques 31,32.

De préférence, dans la position de repos Pr de l'organe de manoeuvre, ledit deuxième levier 5 recouvre le cliquet 9 en y interdisant l'accès, ainsi que la roue dentée et notamment afin d'éviter l'insertion des doigts. Dans cette position, illustrée non limitativement à la figure 2 ou 3 (ou encore aux figures 9 et 10) on remarque que la surface extérieure du deuxième levier peut être affleurant aux bords supérieurs des flasques 31, 32. Le deuxième levier forme alors un couvercle pour le cliquet et la roue dentée au niveau de l'inter-espace entre les flasques.

Dans ladite position de repos Pr de l'organe de manoeuvre, la dimension d'encombrement repérée H, hors tout, depuis la platine de fixation et selon une direction perpendiculaire à la platine est inférieure à 40 mm, de préférence inférieure ou égale à 35 mm, et de préférence supérieure à 25 mm, par exemple 32 mm.

Selon un mode de réalisation avantageux, le premier levier 4 comprend, successivement, (voir figure 2 ou encore la figure 10) depuis l'axe de pivot A4 entre le premier levier 4 et le support fixe 3, une première section de longueur 40, suivie d'une deuxième section de longueur 41 du premier levier 4, ladite deuxième section de longueur 41 formant ladite poignée 8 et étant d'axe incliné par rapport à l'axe de la première section de longueur 40. L'angle d'inclinaison entre la première section de longueur 40 et la deuxième section de longueur 41 du premier levier 4 est telle que dans ladite position de repos Pr, la poignée 8 formée par le premier levier 4 s'étend par rapport audit support fixe 3, suivant une direction inclinée par rapport à l'axe longitudinal A1 dudit support fixe 3, en étant orientée du même côté que celui de la platine de fixation 30.

Ainsi et tel qu'illustré à la figure 2, à titre d'exemple non limitatif, la poignée 8 peut être inclinée d'un angle α par rapport à l'axe longitudinal du support fixe 3 compris entre 15° et 90°, notamment entre 25° et 65° (i.e 45°). Une telle inclinaison permet avantageusement de fixer la platine de fixation 30 sur une paroi latérale d'une caisse de véhicule, en permettant, en position de repos de l'organe de manoeuvre Pr que la poignée 8 soit située à l'avant (ou à l'arrière) de la caisse, dans la position escamotée de la poignée 8.

Ainsi la figure 21 illustre un tel agencement pour lequel la platine 30 du dispositif est fixée à une paroi latérale d'un profilé Pc d'angle de la caisse C, et alors que la poignée 8 s'étend, dans la position de repos Pr de l'organe de manoeuvre, suivant une position, le long d'un pan du profilé d'angle Pc, incliné par exemple d'un angle de 45°, par rapport à la face latérale du profilé.

La figure 22 illustre un autre agencement de dispositif conforme à l'invention selon un troisième mode de réalisation de l'invention. Là encore, la platine 30 du dispositif est fixée latéralement à la caisse, sur le châssis en bas de caisse, et alors que, dans la position de repos de l'organe de manoeuvre la poignée 8 s'étend globalement à angle droit par rapport à la platine et à la face latérale, et est reçue dans un logement du châssis sur l'avant de caisse.

Ainsi et de préférence, un tel dispositif 1 équipe l'avant de la caisse C, au niveau d'un angle de la caisse du véhicule, la platine de fixation 30 du dispositif 1 fixée à une surface latérale de la caisse, la poignée 8 de l'organe de manoeuvre 4,5 s'étendant, dans ladite position de repos Pr de l'organe de manoeuvre, vers l'intérieur, dans une position inclinée par rapport à la surface latérale.

Le premier levier 4 peut être obtenu par découpe d'une tôle et pliage de la tôle afin de former respectivement la première section de longueur 40 et la deuxième section de longueur 41 du premier levier 4. La deuxième section de longueur 41 peut être tubulaire (ou semi tubulaire) et/ou la première section de longueur 40 peut comprendre deux branches 43,44, s'étendant respectivement dans deux inter-espaces It1 et It2 respectifs définis entre les flasques 31,32, d'une part, et l'ensemble cliquet 9 anti-retour et deuxième levier 5, d'autre part. Ces branches 43,44 portent des ouvertures traversées par l'axe de pivot A4. Un tel mode de réalisation du premier levier 4 est illustré des figures 1 à 21.

Selon une autre alternative illustrée à la figure 22, la première section de longueur du premier levier 4 et la deuxième section du premier levier 4 sont constituées par deux tôles distinctes, après des opérations d'emboutissage et de pliage, et soudées l'une à l'autre. Ainsi, la première section de longueur peut comprendre une première tôle pliée comprenant les deux branches 43,44 telles que précédemment décrites. La deuxième section du levier à fonction de poignée peut être constituée d'une boucle 45 formée par une deuxième tôle sous forme d'une bande et dont les deux extrémités sont soudées à la tôle de la première section de longueur du levier.

Selon un mode de réalisation notamment illustré des figures 1 à 8, ledit deuxième levier 5 présente une extrémité libre de préhension 50, ainsi qu'une came 51 destinée à engager avec ledit cliquet 9 au désengagement et de telle façon à provoquer la libération en rotation de l'axe d'entraînement 2, depuis la position de repos Pr de l'organe de manoeuvre par une action de rotation sur le deuxième levier.

Ainsi, et tel qu'illustré à la figure 8, la rotation dudit deuxième levier 5 à l'encontre de la force de rappel des moyens ressort permet la libération de l'axe d'entraînement : cette rotation dudit deuxième levier 5 provoque, conjointement, l'échappement de la dent 7 d'actionnement de la denture de la roue dentée 6, d'une part, et l'échappement du cliquet 9 de la denture de la roue dentée 6 par l'action de la came 51 sur le cliquet 9 en provoquant son dégagement, d'autre part.

A la figure 8, le deuxième levier 5 pivote dans le sens anti-horaire. A partir d'une certaine course, la came 51 engage avec le cliquet 9 et provoque la rotation du cliquet 9 dans le sens horaire, dégageant le cliquet 9 de la roue dentée.

Avantageusement, la libération de l'axe d'entraînement peut être obtenue uniquement par l'actionnement en rotation du deuxième levier 5, opération requérant une seule main pour l'opérateur.

Le mode de réalisation des figures 9 à 21 se distingue de celui des figures 1 à 8 par le mécanisme de libération de l'axe d'entraînement 2. Avantageusement, et selon ce mode de réalisation, la libération en rotation de l'axe d'entraînement 2 est obtenue par une action sur la poignée 8 de l'organe de manoeuvre.

Plus particulièrement, les mouvements d'oscillation du premier levier 4 de l'organe de manoeuvre permettant l'actionnement en rotation de l'axe d'entraînement s'opèrent sur une course angulaire limitée, à partir de la position de repos Pr de l'organe de manoeuvre, appelée course angulaire d'actionnement. Avantageusement la libération en rotation de l'axe d'entraînement 2 est obtenue, à partir de ladite position de repos Pr, par une action de traction sur la poignée 8 de l'organe de manoeuvre et selon une course angulaire allant au-delà de la course angulaire d'actionnement.

A cet effet, le mécanisme de libération de l'axe d'actionnement 2 comprend :
- une ou plusieurs cames 38 du support fixe 3, destinées à coopérer avec un ou plusieurs suiveurs de cames 53 du deuxième levier 5, lors de la rotation de la poignée 8 au-delà de la course angulaire d'actionnement, engendrant la rotation relative du deuxième levier 5 par rapport au premier levier 4 à l'encontre de la force de rappel des moyens ressorts, et jusqu'à faire échapper la dent 7 de la roue dentée 6,
- des butées 46 du premier levier 4 destinées à coopérer avec le cliquet 9, lors de la rotation de la poignée 8 au-delà de la course angulaire d'actionnement, afin de provoquer l'échappement du cliquet 9 de la denture de la roue dentée 6.

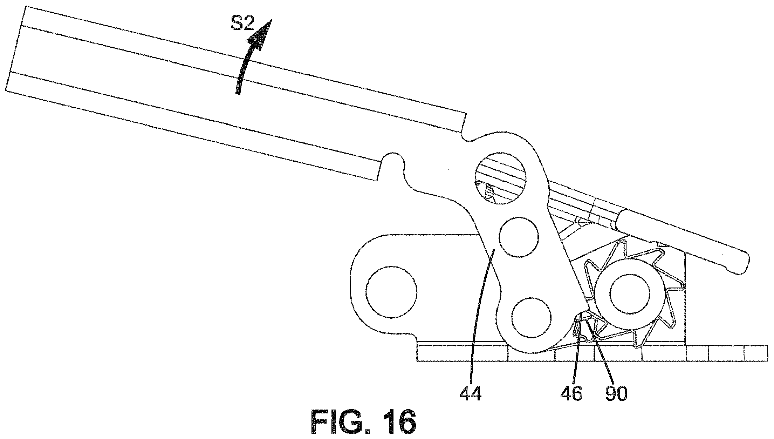

Par exemple, telles qu'illustrées à la figure 15, les cames 38 sont formées par des rampes formées sur les bords supérieurs 36,37 des flasques 31,32, les suiveurs de cames 53, par des ergots latéraux 54 dudit deuxième levier 5. Tel qu'illustré aux figures 15 et 16, lors de la rotation du premier levier 4 suivant le sens S2, les ergots 54 à fonction de suiveur de came 53 suivent la rampe des cames 38 du support fixe 3, ce qui force la rotation relative du deuxième levier 5 par rapport au premier levier 4, à l'encontre de la force de rappel des moyens ressorts entre ces éléments, et jusqu'à faire échapper la dent 7 de la roue dentée 6, comme visible à la figure 16.

Les butées 46 du premier levier 4 peuvent être formées aux extrémités de deux branches 43,44 s'étendant respectivement dans deux inter-espaces It1 et It2 respectifs définis entre les flasques 31,32, d'une part, et l'ensemble cliquet 9 anti-retour et deuxième levier 5, d'autre part, les butées 46 coopérant avec des ergots latéraux 90 du cliquet 9 pour provoquer la rotation du cliquet 9 et l'échappement du cliquet 9 de la roue dentée 6.

Ainsi, et selon l'exemple précédent, telles qu'illustrées aux figures 16 et 17, les butées 46 du premier levier 4 engagent avec le cliquet 9, en particulier au niveau d'ergots latéraux 90 du cliquet 9. La poursuite de la rotation du premier levier 4 suivant le sens S2 permet ainsi d'entraîner conjointement la rotation du cliquet 9 à l'encontre de la force de rappel des moyens ressort du cliquet 9, et jusqu'à faire échapper le cliquet 9 de la denture de la roue dentée 6. L'échappement de la dent 7 de la roue dentée 6 peut intervenir, le cas échant, lors de la rotation du premier levier 4 suivant le sens S2, préalablement à l'échappement du cliquet 9 de la denture de la roue dentée 6. En bout de course du premier levier 4, tel qu'illustré à la figure 17, la dent 7 et le cliquet 9 sont entièrement dégagés de la roue dentée 6, alors libre de rotation avec l'axe d'entraînement 2. Avantageusement, la position de l'organe de manoeuvre peut être verrouillée en cette position par engagement des ergots 54 du deuxième levier dans des épaulements 39 correspondants des flasques 31,32 du support fixe 3, et comme visible à la figure 18.

Selon un mode de réalisation, le dispositif peut présenter des moyens d'immobilisation de dispositif d'enroulement, dans la position de repos Pr de l'organe de manoeuvre. Par exemple, ces moyens comprenant :
- des ouvertures 34,35 desdits flasques 31,32,
- des ouvertures 42,43 dudit premier levier 4, en regard desdites ouvertures 34,35 de flasques dans ladite position de repos Pr de l'organe de manoeuvre,
- un épaulement 52 dudit deuxième levier 5, au voisinage desdites ouvertures 34,35,42,43 de flasques et du premier levier, dans ladite position de repos de l'organe de manoeuvre.

Il est ainsi possible d'immobiliser le dispositif d'enroulement 1 en insérant un organe de blocage tel qu'un câble notamment câble TIR ou une goupille, simultanément dans lesdites ouvertures 34,35 desdits flasques et les ouvertures 42,43 dudit premier levier 4 de telle façon à obtenir le blocage de la rotation relative entre le premier levier 4 et le support fixe 3, l'organe de blocage coopérant avec ledit épaulement 52 dudit deuxième levier 5 de manière à obtenir le blocage de la rotation relative entre ledit premier levier 4 et ledit deuxième levier 5.

Selon un mode de réalisation, le deuxième levier 5 peut être une pièce moulée, notamment de fonderie, qui comprend la dent 7 d'entraînement, au niveau d'une ouverture traversante du corps du second levier 5 notamment.

Cette pièce moulée peut former, outre la dent 7, l'extrémité de préhension 51, un palier pour le passage de l'axe de pivot A4, voire, le cas échéant, la came 51, destinée à coopérer avec le cliquet 9, notamment au niveau d'une came associée sur le cliquet 9.

### NOMENCLATURE

1. Dispositif d'enroulement,
2. Axe d'entraînement,
3. Support fixe,
4. Premier levier (organe de manoeuvre),
5. Deuxième levier (organe de manoeuvre),
6. Roue dentée,
7. Dent d'entraînement (deuxième levier 5),
8. Poignée (premier levier),
9. Cliquet,
30. Platine fixation (support fixe 3),
31,32. Flasques (support fixe 3),
34,35. Ouvertures pour organe de blocage (flasques).
36,37. Bords supérieurs des flasques,
38. Cames (support fixe 3 du mode de réalisation des figures 9 à 22),
39. Epaulement (verrouillage de l'organe de manoeuvre en position)
40. Première section de longueur (premier levier 4),
41. Deuxième section de longueur (premier levier 4),
42,43. Ouvertures pour organe de blocage (premier levier 4),
43,44. Branches (40. Première section de longueur),
45. Boucle à fonction de poignée (mode de réalisation de la figure 22),
46. Butées (Premier levier 4 du mode de réalisation des figures 9 à 22),
50. Extrémité de préhension (deuxième levier 5 du mode de réalisation des figures 1 à 8),
51. Came (deuxième levier 5 du mode de réalisation des figures 1 à 8),
52. Epaulement pour organe de blocage (deuxième levier 5),
53. Suiveurs de cames (deuxième levier du mode de réalisation des figures 9 à 22),
54. Ergots latéraux (Suiveurs de cames),
90. Ergots latéraux (Cliquet 9)

A1. Axe longitudinal support fixe,
A2. Axe de pivot entre l'axe d'entraînement 2 et le support fixe 3,
A4. Axe de pivot entre le premier levier 4 et le support fixe 3,
A5. Axe de pivot entre le deuxième levier 5 et le premier levier 4.
A9. Axe de pivot entre le cliquet et le support fixe 3.

S1, S2. Sens de rotation
Pr. Position de repos

H. Dimension d'encombrement.
C. Caisse,
Pc. Profilé d'angle de caisse,
F. Flèche illustrant l'action du pouce.

## Revendications

1. Dispositif d'enroulement (1) à commande manuelle d'un élément enroulable, tel qu'une bâche, autour d'un arbre d'enroulement, ledit dispositif comprenant :
- un axe d'entrainement (2),
- un support fixe (3) sur lequel est monté en libre rotation ledit axe d'entrainement (2),
- un organe de manoeuvre (4,5) présentant une poignée (8) et un mécanisme d'encliquetage aptes à permettre la rotation dudit axe d'entrainement (2) dans un seul sens lors de la mise en oscillation dudit organe de manoeuvre, ledit mécanisme d'encliquetage comprenant :
- une roue dentée (6) solidaire en rotation de l'axe d'entrainement (2),
- une dent (7), à fonction d'entraînement, actionnable par l'organe de manoeuvre (4,5), apte à engager avec la roue dentée (6) pour provoquer la rotation de l'axe d'entraînement suivant un premier sens de rotation (S1) de la poignée (8) de l'organe de manoeuvre, la dent (7) étant apte à échapper à la denture de la roue dentée (6), dans un deuxième sens (S2) de rotation de la poignée de l'organe de manoeuvre,
- un cliquet (9), à fonction d'anti-retour, solidaire dudit support fixe (3), apte à glisser sur la roue dentée (6) lors de l'actionnement de la poignée (8) de l'organe de manoeuvre dans ledit premier sens de rotation (S1), et apte à engager avec la denture de la roue dentée (6) pour retenir l'axe d'entraînement (2) lors de l'actionnement de la poignée de l'organe de manoeuvre dans ledit deuxième sens de rotation (S2), ledit organe de manoeuvre (4,5) comprenant:
- un premier levier (4) formant ladite poignée (8), ledit premier levier (4) étant articulé audit support fixe (3),
- un deuxième levier (5) portant ladite dent (7) d'entraînement, ledit deuxième levier (5) étant articulé audit premier levier (4) suivant un axe de pivot (A5) entre le premier et ledit deuxième levier,
- des moyens ressorts entre le premier levier (4) et ledit deuxième levier (5), contraignant ledit deuxième levier (5) et la dent (7) portée par ledit deuxième levier (5) en direction de la roue dentée (6), de manière à provoquer l'engagement de la dent (7) dans ledit premier sens de rotation (S1) de la poignée (8) de l'organe de manoeuvre et autoriser l'échappement de la roue dentée (S2) dans ledit deuxième sens de rotation (S2) de la poignée de l'organe de manoeuvre,
**caractérisé en ce que** ledit premier levier (4) est articulé audit support fixe (3), suivant un axe de pivot (A4) distinct dudit axe de pivot (A2) dudit axe d'entraînement (2), et de position écartée par rapport à ce dernier.

2. Dispositif d'enroulement (1) selon la revendication 1 présentant une position de repos (Pr) de l'organe de manoeuvre (4,5), rabattu contre ledit support fixe (3) et dans laquelle la dent (7) d'entrainement dudit deuxième levier (5) et le cliquet (9) coopèrent avec la denture de la roue dentée (6) en bloquant la rotation de l'axe d'entrainement (2).

3. Dispositif d'enroulement (1) selon la revendication 2, dans lequel le support fixe (3) présente une platine de fixation (30) et des flasques (31,32) entre lesquels sont articulés la roue dentée (6) et le cliquet (9), et dans lequel le premier levier (4) comprend, successivement, depuis l'axe de pivot (A4) entre le premier levier (4) et le support fixe (3), une première section de longueur (40), suivie d'une deuxième section de longueur (41) du premier levier (4), ladite deuxième section de longueur (41) formant ladite poignée (8) et étant d'axe incliné par rapport à l'axe de la première section longueur (40) et de telle façon que dans ladite position de repos (Pr), la poignée (8) formée par le premier levier (4) s'étend par rapport audit support fixe (3), suivant une direction inclinée par rapport à l'axe longitudinal (A1) dudit support fixe (3), en étant orientée du même côté que celui de la platine de fixation (30).

4. Dispositif selon la revendication 2 ou 3, dans lequel les mouvements d'oscillation du premier levier (4) de l'organe de manoeuvre permettant l'actionnement en rotation de l'axe d'entraînement s'opère sur une course angulaire limitée, à partir de la position de repos (Pr) de l'organe de manoeuvre, appelée course angulaire d'actionnement, la libération en rotation de l'axe d'entraînement (2) étant obtenue, à partir de ladite position de repos (Pr), par une action de traction sur la poignée (8) de l'organe de manoeuvre et selon une course angulaire allant au-delà de la course angulaire d'actionnement, ledit mécanisme de libération comprenant :
- une ou plusieurs cames (38) du support fixe (3), destinées à coopérer avec un ou plusieurs suiveurs de cames (53) du second levier (5), lors de la rotation de la poignée (8) au-delà de la course angulaire d'actionnement, de telle façon à engendrer la rotation relative du deuxième levier (5) par rapport au premier levier (4) à l'encontre de la force de rappel des moyens ressorts, et jusqu'à faire échapper la dent (7) de la roue dentée (6),
- des butées (46) du premier levier (4) destinées à coopérer avec le cliquet (9), lors de la rotation de la poignée (8) au-delà de la course angulaire d'actionnement, afin de provoquer l'échappement du cliquet (9) de la denture de la roue dentée (6).

5. Dispositif selon les revendications 3 et 4, dans lequel les cames (38) sont formées par des rampes formées sur les bords supérieurs (36,37) des flasques (31,32), les suiveurs de cames (53), par des ergots latéraux (54) dudit deuxième levier (5).

6. Dispositif selon les revendications 3 et 4 ou 5, dans lequel les butées (46) du premier levier (4) sont formées aux extrémités de deux branches (43,44) s'étendant respectivement dans deux inter-espaces It1 et It2 respectifs définis entre les flasques (31,32), d'une part, et l'ensemble cliquet (9) anti-retour et deuxième levier (5), d'autre part, les butées (46) coopérant avec des ergots latéraux (90) du cliquet (9) pour provoquer la rotation du cliquet (9) et l'échappement du cliquet (9) de la roue dentée (6).

7. Dispositif d'enroulement (1) selon la revendication 2 ou 3, dans lequel ledit deuxième levier (5) présente une extrémité libre de préhension (50), ainsi qu'une came (51) destinée à engager avec ledit cliquet (9) au désengagement et de telle façon à provoquer la libération en rotation de l'axe d'entraînement (2), depuis la position de repos (Pr) de l'organe de manoeuvre, par la rotation dudit deuxième levier (5) à l'encontre de la force de rappel des moyens ressort, cette rotation dudit deuxième levier (5) provoquant conjointement l'échappement de la dent (7) d'actionnement de la denture de la roue dentée (6), d'une part, et l'échappement du cliquet (9) de la denture de la roue dentée (6) par l'action de la came (51), d'autre part.

8. Dispositif d'enroulement selon la revendication 2 seule ou en combinaison avec les revendications 3 à 7, qui présente des moyens d'immobilisation de dispositif d'enroulement, dans la position de repos (Pr) de l'organe de manoeuvre.

9. Dispositif d'enroulement selon la revendication 5, dans lequel ledit support fixe (3) comprend des flasques (31,32) entre lesquels sont disposés la roue dentée (6) et le cliquet (9) anti-retour et entre lesquels peut être rabattu l'organe de manoeuvre dans ladite position de repos (Pr),
lesdits moyens d'immobilisation de dispositif d'enroulement, dans la position de repos de l'organe de manoeuvre (Pr), comprenant :
- des ouvertures (34,35) desdits flasques (31,32),
- des ouvertures (42,43) dudit premier levier (4), en regard desdites ouvertures (34,35) de flasques dans ladite position de repos (Pr) de l'organe de manoeuvre,
- un épaulement (52) dudit deuxième levier (5), au voisinage desdites ouvertures (34,35,42,43) de flasques et du premier levier, dans ladite position de repos de l'organe de manoeuvre,
et de telle façon à immobiliser le dispositif d'enroulement (1) en insérant un organe de blocage tel qu'un câble notamment câble TIR ou une goupille, simultanément dans lesdites ouvertures (34,35) desdits flasques et les ouvertures (42,43) dudit premier levier (4) de telle façon à obtenir le blocage de la rotation relative entre le premier levier (4) et le support fixe (3), l'organe de blocage coopérant avec ledit épaulement (52) dudit deuxième levier (5) de manière à obtenir le blocage de la rotation relative entre ledit premier levier (4) et ledit deuxième levier (5).

10. Dispositif d'enroulement selon l'une des revendications 1 à 9, dans lequel l'axe de pivot (A4) entre le premier levier (4) et le support fixe (3) est confondu avec l'axe de pivot (A9) du cliquet (9) à fonction d'anti-retour.

11. Dispositif selon la revendication 2, seule ou prise en combinaison avec l'une des revendications 3 à 10, dans lequel, dans ladite position de repos (Pr) de l'organe de manoeuvre, l'axe de pivot (A4) entre le premier levier (4) et le support fixe (3) est positionné dans une position intermédiaire entre l'axe de pivot (A2) de l'axe d'entraînement (2) et l'axe de pivot (A5) de l'articulation entre le premier levier (4) et le deuxième levier (5).

12. Dispositif selon la revendication 2 seule ou prise en combinaison avec l'une des revendications 3 à 11, dans lequel, dans la position de repos (Pr) de l'organe de manoeuvre, ledit deuxième levier (5) recouvre le cliquet (9) en y interdisant l'accès.

13. Dispositif selon la revendication 2 seule ou prise en combinaison avec l'une des revendications 3 à 12, dans lequel, dans ladite position de repos (Pr) de l'organe de manoeuvre, l'encombrement hors tout depuis la platine de fixation et selon une direction perpendiculaire à la platine est inférieure à 40 mm, de préférence inférieure à 35 mm.

14. Caisse de véhicule de transport de marchandises équipée d'une bâche amovible et d'un dispositif d'enroulement à commande manuelle selon l'une des revendications 1 à 13, apte à permettre l'enroulement de la dite bâche autour d'un arbre d'enroulement et la mise en tension de ladite bâche.

15. Caisse selon la revendication 14, équipée d'un dispositif selon la revendication 2, à l'avant de la caisse, au niveau d'un angle de la caisse (C), et dans laquelle la platine de fixation (30) du dispositif (1) est fixée à une surface latérale de la caisse, la poignée (8) de l'organe de manoeuvre (4,5) s'étendant, dans ladite position de repos (Pr), vers l'intérieur, dans une position inclinée par rapport à la surface latérale et à la platine de fixation (30).

## Patentansprüche

1. Handbetätigte Wickelvorrichtung (1) für ein aufwickelbares Element, wie eine Plane, um eine Wickelwelle, wobei die Vorrichtung umfasst:
- eine Antriebswelle (2),
- eine feste Halterung (3), auf der die Antriebswelle (2) frei drehbar gelagert ist,
- ein Betätigungselement (4, 5) mit einem Griff (8) und einem Rastmechanismus, der es der Antriebswelle (2) ermöglicht, sich während der Schwingung des Betätigungselements nur in eine Richtung zu drehen, wobei der Schnappmechanismus umfasst:
- ein Zahnrad (6), das drehfest mit der Antriebswelle (2) verbunden ist,
- einen Zahn (7) mit einer Antriebsfunktion, der durch das Betätigungselement (4, 5) betätigbar ist und mit dem Zahnrad (6) in Eingriff treten kann, um die Drehung der Antriebswelle gemäß einer ersten Drehrichtung (S1) des Griffs (8) des Betätigungselements zu bewirken, wobei der Zahn (7) in einer zweiten Drehrichtung (S2) des Griffs des Betätigungselements der Verzahnung des Zahnrades (6) entweichen kann,
- eine Klaue (9) mit einer Rücklaufsperrwirkung, die einstückig mit der festen Halterung (3) ausgebildet ist, um während der Betätigung des Griffs (8) des Betätigungselements auf dem Zahnrad (6) in der ersten Drehrichtung (S1) gleiten zu können und um in die Verzahnung des Zahnrads (6) einzugreifen, um die Antriebswelle (2) zu halten während der Betätigung des Griff des Betätigungselements in die zweite Drehrichtung (S2), wobei das Betätigungselement (4, 5) aufweist:
- einen ersten Hebel (4), der den Griff (8) bildet, wobei der erste Hebel (4) an der festen Halterung (3) angelenkt ist,
- einen zweiten Hebel (5), der den Antriebszahn (7) trägt, wobei der zweite Hebel (5) an dem ersten Hebel (4) um eine Schwenkachse (A5) zwischen dem ersten und dem zweiten Hebel angelenkt ist,
- eine Federeinrichtung zwischen dem ersten Hebel (4) und dem zweiten Hebel (5), die den zweiten Hebel (5) und den Zahn (7), der von dem zweiten Hebel (5) getragen wird, in Richtung des Zahnrads (6) zwingt, um einen Eingriff des Zahns (7) in der ersten Drehrichtung (S1) des Griffs (8) des Betätigungselements zu bewirken und das Entweichen des Zahnrades (S2) in der zweiten Drehrichtung (S2) des Griffs des Betätigungselements zu erlauben, **dadurch gekennzeichnet, dass** der erste Hebel (4) an der festen Halterung (3) um eine Schwenkachse (A4) angelenkt ist, die von der Schwenkachse (A2) der Antriebswelle (2) verschieden ist und relativ zu dieser beabstandet ist.

2. Wickelvorrichtung (1) nach Anspruch 1, die eine gegen die feste Halterung (3) gefaltete Ruhestellung (Pr) des Betätigungselements (4, 5) aufweist und bei welcher der Antriebszahn (7) des besagten zweiten Hebels (5) und die Klaue (9) mit der Verzahnung des Zahnrades (6) zusammenwirken, indem sie die Drehung der Antriebswelle (2) blockieren.

3. Wickelvorrichtung (1) nach Anspruch 2, wobei die feste Halterung (3) eine Befestigungsplatte (30) und Flansche (31, 32) aufweist, zwischen denen das Zahnrad (6) und die Klaue (9) angelenkt sind, und wobei der erste Hebel (4) aufeinanderfolgend von der Schwenkachse (A4) zwischen dem ersten Hebel (4) und der festen Halterung (3) einen ersten Längenabschnitt (40) aufweist, gefolgt von einem zweiten Längenabschnitt (41) des ersten Hebels (4), wobei der zweite Längenabschnitt (41) den Griff (8) bildet und bezüglich der Achse der ersten Abschnittslänge (40) geneigt ist, sodass in der Ruheposition (Pr) der durch den ersten Hebel (4) gebildete Griff (8) sich in Bezug auf die feste Halterung (3) in einer Richtung erstreckt, die in Bezug auf die Längsachse (A1) der festen Halterung (3) geneigt ist und auf die gleiche Weise wie die der Befestigungsplatte ausgerichtet ist (30).

4. Vorrichtung nach Anspruch 2 oder 3, wobei die Schwingungsbewegungen des ersten Hebels (4) des Betätigungselements, welche die Drehbetätigung der Antriebswelle zulässt, über einen begrenzten Winkelweg erfolgt, ausgehend von der Ruhestellung (Pr) des Betätigungselements, genannt Winkelbetätigungshub, wobei die Drehfreigabe der Antriebswelle (2) aus der Ruhestellung (Pr) durch eine Zugwirkung auf den Griff (8) des Betätigungsgliedes und in einem über den Winkelhub hinaus gehenden Winkelhub erhalten wird, wobei der Freigabemechanismus umfasst:
- einen oder mehrere Nocken (38) der festen Halterung (3), die dazu bestimmt sind, mit einem oder mehreren Nockenfolgern (53) des zweiten Hebels (5), wenn der Griff (8) über den Winkelbetätigungshub gedreht wird, derart zusammenzuwirken, um die Relativdrehung des zweiten Hebels (5) in Bezug auf den ersten Hebel (4) gegen die Rückstellkraft der Federmittel zu erzeugen, und bis zum Freigeben des Zahns (7) des Zahnrads (6),
- Anschläge (46) des ersten Hebels (4), die mit der Klaue (9) während der Drehung des Griffs (8) über den Winkelbetätigungshub hinaus zusammenwirken sollen, um das Entweichen der Klaue (9) aus der Verzahnung des Zahnrades (6) zu bewirken.

5. Vorrichtung nach den Ansprüchen 3 und 4, bei welcher die Nocken (38) durch Rampen, die an den oberen Rändern (36, 37) der Flansche (31, 32) ausgebildet sind, gebildet sind, die Nockenfolger (53) durch seitliche Laschen (54) des zweiten Hebels (5).

6. Vorrichtung nach den Ansprüchen 3 und 4 oder 5, wobei die Anschläge (46) des ersten Hebels (4) an den Enden zweier Zweige (43, 44) ausgebildet sind, die sich jeweils in zwei jeweiligen Zwischenräumen It1 und It2 erstrecken, die zwischen den Flanschen (31, 32) einerseits, und der Klauenanordnung (9) und zweitem Hebel (5), andererseits, definiert sind, wobei die Anschläge (46) mit seitlichen Ansätzen (90) der Klaue (9) zusammenwirken, um eine Drehung der Klaue (9) und das Entweichen der Klaue (9) des Zahnrades (6) hervorzurufen.

7. Wickelvorrichtung (1) nach Anspruch 2 oder 3, wobei der zweite Hebel (5) ein freies Greifende (50) aufweist sowie eine Nocke (51), welche zum Eingriff mit der Klaue (9) beim Ausklinken vorgesehen ist und derart, dass die Drehfreigabe der Antriebswelle (2) aus der Ruhestellung (Pr) des Betätigungselements durch Drehen des zweiten Hebels (5) gegen die Rückstellkraft der Federmittel bewirkt wird, wobei diese Drehung des zweiten Hebels (5) gemeinsam das Entweichen des Zahns (7) zur Betätigung der Verzahnung des Zahnrads (6) einerseits und die Hemmung der Klaue (9) der Verzahnung des Zahnrades (6) durch die Wirkung des Nockens (51) andererseits hervorruft.

8. Wickelvorrichtung nach Anspruch 2 allein oder in Kombination mit den Ansprüchen 3 bis 7, welche Mittel zum Feststellen der Wickelvorrichtung aufweist, in der Ruhestellung (Pr) des Betätigungselements.

9. Wickelvorrichtung nach Anspruch 5, bei welcher die feste Halterung (3) Flansche (31,32) umfasst, zwischen denen das Zahnrad (6) und die Klaue (9) angeordnet sind und zwischen denen das Betätigungselement in der Ruhestellung (Pr) gefaltet werden kann,
wobei die Mittel zum Feststellen der Wickelvorrichtung in der Ruheposition (Pr) des Betätigungselements umfassen:
- Öffnungen (34,35) der besagten Flansche (31,32),
- Öffnungen (42,43) des besagten ersten Hebels (4), neben den besagten Öffnungen (34,35) der Flansche in der besagten Ruhestellung (Pr) des Betätigungselements,
- eine Schulter (52) des besagten zweiten Hebels (5), angrenzend an die Flanschöffnungen (34,35,42,43) und den ersten Hebel, in der besagten Ruhestellung des Betätigungselementes,
und in einer Weise, um die Wickelvorrichtung (1) zu immobilisieren durch gleichzeitiges Einfügen eines Verriegelungselements, wie eines Kabels insbesondere TIR Draht oder Stift, in die Öffnungen (34,35) der Flansche und Öffnungen (42,43) der ersten Hebel (4), um die Sperrung der Relativdrehung zwischen dem ersten Hebel (4) und der festen Halterung (3) zu erhalten, wobei das Verriegelungselement mit der besagten Schulter (52) des besagten zweiten Hebels (5) zusammenwirkt, um die Sperrung der Relativdrehung zwischen dem ersten Hebel (4) und dem zweiten Hebel (5) zu erhalten.

10. Wickelvorrichtung nach einem der Ansprüche 1 bis 9, bei der die Schwenkachse (A4) zwischen dem ersten Hebel (4) und der festen Halterung (3) mit der Schwenkachse (A9) der Klaue (9) mit einer Rücklaufsperrwirkung übereinstimmt.

11. Vorrichtung nach Anspruch 2, allein oder in Kombination mit einem der Ansprüche 3 bis 10, in welcher in der besagten Ruheposition (Pr) des Betätigungselements die Schwenkachse (A4) zwischen dem ersten Hebel (4) und der festen Halterung (3) in einer Zwischenstellung zwischen der Schwenkachse (A2) der Antriebswelle (2) und der Schwenkachse (A5) der Anlenkung zwischen dem ersten Hebel (4) und dem zweiten Hebel (5) positioniert ist.

12. Vorrichtung nach Anspruch 2 allein oder in Kombination mit einem der Ansprüche 3 bis 11, in welcher der zweite Hebel (5) die Klaue (9) in die Ruheposition (Pr) des Betätigungselements zurückholt, indem er dort den Zugang verhindert.

13. Vorrichtung nach Anspruch 2 allein oder in Kombination mit einem der Ansprüche 3 bis 12, in welcher, in der Ruheposition (Pr) des Betätigungselements, die Gesamtheit ab der Montageplatte und in einer Richtung senkrecht zu der Platte weniger als 40 mm, vorzugsweise weniger als 35 mm, ist.

14. Transportfahrzeug-Karosserie mit einer abnehmbaren Plane und einer handbetätigten Wickelvorrichtung nach einem der Ansprüche 1 bis 13, der geeignet ist, das Wickeln der Plane um eine Wickelwelle und das Spannen der Plane zu ermöglichen.

15. Karosserie nach Anspruch 14, ausgestattet mit einer Vorrichtung nach Anspruch 2, an der Vorderseite der Schachtel, an einer Ecke der Schachtel (C), und wobei die Befestigungsplatte (30) der Vorrichtung (1) an einer Seitenfläche der Kiste angebracht ist, wobei der Griff (8) des Betätigungselements (4, 5) sich in der Ruheposition (Pr) nach innen in einer gegenüber der Seitenfläche und der Befestigungsplatte (30) geneigten Position erstreckt.

## Claims

1. Manually-controlled winding device (1) for an element that can be wound, such as a cover, around a winding shaft, said device comprising:
- a drive shaft (2),
- an attachment support (3) whereon said drive shaft (2) is assembled in free rotation,
- a drive body (4, 5) that has a handle (8) and a clipping mechanism able to enable the rotation of said drive shaft (2) in one single direction during the oscillation of said drive body, said clipping mechanism comprising:
- a gearwheel (6) connected rotating to the drive shaft (2),
- a tooth (7), with a drive function, that can be actuated by the drive body (4, 5), able to engage with the gearwheel (6) to induce the rotation of the drive shaft along a first rotating direction (S1) of the handle (8) of the drive body, the tooth (7) being able to escape from the gearing of the gearwheel (6), in a second rotating direction (S2) of the handle of the drive body,
- a ratchet (9) with an anti-reverse function, connected to said attachment support (3), able to slide onto the gearwheel (6) during the actuation of the handle (8) of the drive body in said first rotating direction (S1), and able to engage with the gearing of the gearwheel (6) to retain the drive shaft (2) during the actuation of the handle of the drive body in said second rotating direction (S2), said drive body (4, 5) comprising:
- a first lever (4) forming said handle (8), said first lever (4) being articulated to said attachment support (3),
- a second lever (5) holding said drive tooth (7), said second lever (5) being articulated to said first lever (4) along a pivot bolt (A5) between the first and said second lever,
- spring means between the first lever (4) and said second lever (5), binding said second lever (5) and the tooth (7) held by said second lever (5) in the direction of the gearwheel (6), so as to induce the engagement of the tooth (7) in said first rotating direction (S1) of the handle (8) of the drive body and to enable the escapement of the gearwheel (S2) in said second rotating direction (S2) of the handle of the drive body, **characterised in that** said first lever (4) is articulated to said attachment support (3), along a pivot bolt (A4) separate from said pivot bolt (A2) of said drive shaft (2), and in a distant position in relation to the latter.

2. Winding device (1) according to claim 1 that has a rest position (Pr) of the drive body (4, 5), folded against said attachment support (3) and wherein the drive tooth (7) of said second lever (5) and the ratchet (9) cooperate with the gearing of the gearwheel (6) by blocking the rotation of the drive shaft (2).

3. Winding device (1) according to claim 2, wherein the attachment support (3) has an attachment plate (30) and flanges (31, 32) between which the gearwheel (6) and the ratchet (9) are articulated, and wherein the first lever (4) comprises, successively, from the pivot bolt (A4) between the first lever (4) and the attachment support (3), a first length section (40), followed by a second length section (41) of the first lever (4), said second length section (41) forming said handle (8) and being of a tilted axis in relation to the axis of the first length section (40), and in such a way that in said rest position (Pr), the handle (8) formed by the first lever (4) extends in relation to said attachment support (3), along a tilted direction in relation to the longitudinal axis (A1) of said attachment support (3), by being oriented on the same side as that of the attachment plate (30).

4. Device according to claim 2 or 3, wherein the oscillation movements of the first lever (4) of the drive body enabling the rotating actuation of the drive shaft occurs on a limited angular stroke, from the rest position (Pr) of the drive body, called actuating angular stroke, the rotating release of the drive shaft (2) being obtained, from said rest position (Pr), by a traction action on the handle (8) of the drive body, and according to an angular stroke going beyond the actuating angular stroke, said release mechanism comprising:
- one or several cams (38) of the attachment support (3), intended to cooperate with one or several cam followers (53) of the second lever (5), during the rotation of the handle (8) beyond the actuating angular stroke, so as to generate the relative rotation of the second lever (5) in relation to the first lever (4) against the restoring force of the spring means, and up to making the tooth (7) escape from the gearwheel (6),
- the stoppers (46) of the first lever (4) intended to cooperate with the ratchet (9), during the rotation of the handle (8) beyond the actuating angular stroke, in order to induce the escapement of the ratchet (9) from the gearing of the gearwheel (6).

5. Device according to claims 3 and 4, wherein the cams (38) are formed by ramps formed on the top edges (36, 37) of the flanges (31, 32), the cam followers (53), by lateral spurs (54) of said second lever (5).

6. Device according to claims 3 and 4 or 5, wherein the stoppers (46) of the first lever (4) are formed at the ends of two arms (43, 44) extending respectively into two respective interspaces It1 and It2 defined between the flanges (31, 32), on the one hand, and on the other, the stoppers (46) cooperating with the lateral spurs (90) of the anti-reverse ratchet unit (9) and the escapement of the ratchet (9) from the gearwheel (6).

7. Winding device (1) according to claim 2 or 3, wherein said second lever (5) has a free gripping end (50), as well as a cam (51) intended to engage with said disengagement ratchet (9) and so as to induce the free rotation of the drive shaft (2), from the rest position (Pr) of the drive body, by the rotation of said second lever (5) against the restoring force of the spring means, this rotation of said second lever (5) jointly inducing the escapement of the actuating tooth (7) from the gearing of the gearwheel (6), on the one hand, and the escapement of the ratchet (9) from the gearing of the gearwheel (6) by the action of the cam (51), on the other hand.

8. Winding device according to claim 2, by itself or combined with claims 3 to 7, which has means for immobilising the winding device, in the rest position (Pr) of the drive body.

9. Winding means according to claim 5, wherein said attachment support (3) comprises flanges (31, 32) between which the gearwheel (6) and the anti-reverse ratchet (9) are arranged, and between which the drive body can be folded into the rest position (Pr),
said means for immobilising the winding device, in the rest position (Pr) of the drive body, comprising:
- openings (34, 35) of said flanges (31, 32),
- openings (42, 43) of said first lever (4), opposite said flange openings (34, 35) in said rest position (Pr) of the drive body,
- a shoulder (52) of said second lever (5), near said flange and first lever openings (34, 35, 42, 43), in said rest position of the drive body,
and so as to immobilise the winding device (1) by inserting a blocking body such as a cable, in particular, a TIR cable or a pin, simultaneously in said openings (34, 35) of said flanges and the openings (42, 43) of said first lever (4) so as to achieve the blocking of the relative rotation between the first lever (4) and the attachment support (3), the blocking body cooperating with said shoulder (52) of said second lever (5) so as to achieve the blocking of the relative rotation between said first lever (4) and said second lever (5).

10. Winding device according to one of the claims 1 to 9, wherein the pivot bolt (A4) between the first lever (4) and the attachment support (3) is combined with the pivot bolt (A9) of the anti-reverse function ratchet (9).

11. Device according to claim 2, by itself or combined with one of the claims 3 to 10, wherein, in said rest position (Pr) of the drive body, the pivot bolt (A4) between the first lever (4) and the attachment support (3), is positioned in an intermediary position between the pivot bolt (A2) of the drive shaft (2) and the pivot bolt (A5) of the articulation between the first lever (4) and the second lever (5).

12. Device according to claim 2, by itself or combined with one of the claims 3 to 11, wherein, in said rest position (Pr) of the drive body, said second lever (5) overlaps the ratchet (9) preventing access thereof.

13. Device according to claim 2, by itself or combined with one of the claims 3 to 12, wherein, in said rest position (Pr) of the drive body, the overall blockage from the attachment plate and along a direction perpendicular to the plate is less than 40mm, preferably less than 35mm.

14. Transport goods vehicle body equipped with a removable cover and a manually-controlled winding device according to one of the claims 1 to 13, able to enable the winding of said cover around a winding shaft and the tensioning of said cover.

15. Body according to claim 14, equipped with a device according to claim 2, at the front of the body, at the level of an angle of the body (C), and wherein the attachment plate (30) of the device (1) is attached to a lateral surface of the body, the handle (8) of the drive body (4, 5) extending, in said rest position (Pr), towards the inside, in a tilted position in relation to the lateral surface and to the attachment plate (30).
